# EUROPÄISCHE PATENTANMELDUNG

(11) **EP 2 039 551 A1**
(43) Veröffentlichungstag der Anmeldung: **25.03.2009**
(21) Anmeldenummer: 08016640.8
(22) Anmeldetag: 22.09.2008
(51) Int. Cl.: B60J 7/10

(54) **Faltverdeck mit einer Befestigung des Verdeckbezugs**

(30) Priorität: 21.09.2007 DE 102007045401
(71) Anmelder: Webasto AG, 82131 Stockdorf (DE)
(72) Erfinder: Bruggaier, Ulrike, 82041 Oberhaching (DE); Stimpson, Paul, 80809 München (DE); Brieske, Martin, 81547 München (DE)
(74) Vertreter: Wiese Konnerth Fischer Patentanwälte Partnerschaft

(57) **Zusammenfassung**

Die Erfindung betrifft ein Faltverdeck (1) mit einem Verdeckbezug (8), der an einem am Fahrzeug angelenkten Verdeckgestell (2) gelagert und mit diesem zwischen einer Schließstellung und einer Offenstellung verstellbar ist, wobei das Verdeckgestell (2) zumindest einen Spriegel (6) aufweist, an dem der Verdeckbezug (8) bei geschlossenem Verdeck (1) gehalten ist, wobei erfindungsgemäß vorgesehen ist, dass ein Spannseil (16) am Verdeckgestell (2) angebracht ist, das sich bei geschlossenem Verdeck (1) entlang dem Spriegel (6) erstreckt und den Verdeckbezug (8) gegen den Spriegel (6) gespannt hält und das bei geöffnetem Verdeck (1) mit dem Verdeckbezug (8) vom Spriegel (6) entspannt ist.

## Beschreibung

Die Erfindung betrifft ein Faltverdeck mit einem Verdeckbezug, der an einem am Fahrzeug angelenkten Verdeckgestell gelagert und mit diesem zwischen einer Schließstellung und einer Offenstellung verstellbar ist, wobei das Verdeckgestell zumindest einen Spriegel aufweist, an dem der Verdeckbezug bei geschlossenem Verdeck gehalten ist.

Die übliche Art der Befestigung eines Verdeckbezugs an Gestellteilen eines Faltverdecks wie Spriegeln oder Rahmenteilen erfolgt mittels Kederverbindungen, Steckverbindungen, Klemmverbindungen oder Clipsverbindungen. Damit wird der Verdeckbezug an den Gestellteilen fest angebracht.

Aus der DE 201 18 834 U1 ist ein Faltverdeck mit Spriegeln bekannt geworden, die jeweils einen inneren Längskanal aufweisen, in dem ein Kopfteil eines Kederprofils aufgenommen ist. Ein Befestigungsstreifen des Kederprofils ist an der Innenfläche des Verdeckbezugs fixiert. Der Verdeckbezug ist somit an den Spriegeln mittels des Kederprofils stets fest angebracht.

Wenn ein derartiges Faltverdeck geöffnet und abgelegt wird, bewegt sich der an den Gestellteilen fixierte Verdeckbezug entsprechend der Bewegung der Spriegel bzw. Gestellteile. Der fixierte Verdeckbezug schränkt jedoch die Möglichkeiten bei der Gestaltung der Kinematik des Verdeckgestells wie auch für eine möglichst kleinräumige Ablagestellung des Faltverdecks (d. h. geringes Package-Maß) ein.

Insgesamt sind die Freiheitsgrade der Gestaltung wie auch der Bewegung dieses Faltverdecks somit eingeschränkt.

Wird der Verdeckbezug an einem oder an mehreren Spriegeln nicht befestigt, so dass er bei geschlossenem Faktverdeck ohne Fixierung über diese Spriegel lediglich gespannt verläuft, so kann das Ablegen des Faltverdecks zwar erleichtert sein, der Verdeckbezug kann sich im Fahrbetrieb aber ballonartig aufblähen.

Um dieses ballonartige Aufblähen des Verdeckbezugs zu vermeiden, ist bei dem in der DE 42 10 550 A1 offenbarten Faltverdeck vorgesehen, dass der Verdeckbezug, der über zumindest einige Spriegel lose geführt ist, durch zumindest ein Zugmittel in Gestalt eines Stahlseils bei geschlossenem Faltverdeck gegen diese Spriegel spannbar ist. Das Stahlseil verläuft in Längsrichtung des Faltverdecks bzw. in Fahrtrichtung und ist mit seinem Vorderende am vorderen Spriegel bzw. der Verdeckspitze und mit seinem hinteren Ende am hinteren Spriegel oder Spannbügel fest angebracht. Am Verdeckbezug ist innenseitig eine Zugmittelführungsschlaufe ausgebildet, durch die das Stahlseil geführt ist. Beim geschlossenem Faltverdeck spannt das Stahlseil den Verdeckbezug gegen die Spriegel, so dass der Verdeckbezug an jedem Spriegel in Punktkontakt gehalten ist.

Der Erfindung liegt die Aufgabe zugrunde, ein eingangs genanntes Faltverdeck zu schaffen, das hinsichtlich der Anbringung des Verdeckbezugs an dem Verdeckgestell verbessert ist.

Die Aufgabe wird bei dem eingangs genannten Faltverdeck dadurch gelöst, dass ein Spannseil am Verdeckgestell angebracht ist, das sich bei geschlossenem Verdeck entlang dem Spriegel erstreckt und den Verdeckbezug gegen den Spriegel gespannt hält und das bei geöffnetem Verdeck mit dem Verdeckbezug vom Spriegel entspannt ist.

Vorteilhafte Ausgestaltungen der Erfindung sind in den Unteransprüchen angegeben.

Das Spannseil, das entsprechend dem querverlaufenden Spriegel ebenfalls im wesentlichen in Querrichtung am Faltverdeck verläuft, schafft bei geschlossenem Faltverdeck eine feste Verbindung des Verdeckbezugs am Spriegel im wesentlichen über die Länge dieses Spriegels bzw. entsprechend einer Auflagefläche am Spriegel für den Verdeckbezug. Beim Öffnen des Faltverdecks wird die gespannte Anordnung des Spannseils am Spriegel entspannt, so dass der Verdeckbezug vom Spriegel freigegeben wird und bezüglich des Spriegels lose, flexibel und bewegungsvariabel ist. Damit werden die Möglichkeiten der Faltung des Faltverdecks bzw. des Verdeckbezugs erweitert und die Gestaltungsfreiheit hinsichtlich der Ablage des Faltverdecks (geringes Package-Maß) und der Verdeckkinematik bzw. des Verdeckgestells wird verbessert. Unter dem Begriff Spannseil ist jedes im wesentlichen zugfeste, aber biegeflexible Spann- oder Zugmittel zu verstehen. Ein derartiges Spannseil kann an einem Spriegel oder es kann an mehreren Spriegeln jeweils ein derartiges Spannseil vorgesehen sein. Als Spriegel kann jedes den Verdeckbezug tragendes Bauteil des Verdeckgestells angesehen werden, wie z. B. auch ein Rahmenbauteil eines im Verdeckbezug aufgenommenen Heckfensters, an dem der Verdeckbezug ebenfalls spannbar und entspannbar angebracht werden kann.

Gemäß einer bevorzugten Ausgestaltung ist vorgesehen, dass zum Ausführen einer Relativbewegung zwischen dem Spannseil und dem Spriegel das Spannseil und/oder der Spriegel relativ zum Verdeckgestell bewegbar angebracht ist bzw. sind. Somit kann die Relativbewegung auf unterschiedliche Weisen realisiert werden, die z. B. in Abhängigkeit der jeweiligen Gestellkinematiken gewählt werden können.

Zweckmäßigerweise ist ein Anbindungselement oder dergleichen an der Unterseite oder Innenfläche des Verdeckbezugs befestigt und das Spannseil ist über dieses Anbindungselement mit dem Verdeckbezug verbunden bzw. an diesen angekoppelt, wobei sich das Spannseil relativ zu dem Anbindungselement verschieben kann oder es ist daran festgelegt.

Der Spriegel kann eine definierte bzw. ausgebildete Aufnahme für das Spannseil bzw. das Anbindungselement aufweisen, wobei die Aufnahme eine einfache Anlagefläche sein kann oder als speziell angepasstes Element über die gesamte Länge des Spriegels oder nur über einen Teilabschnitt gebildet sein kann. Insbesondere kann die Aufnahme als Längsnut am Spriegel gebildet sein, die sich zweckmäßigerweise über die Länge des Spriegels erstreckt, so dass eine betriebssichere Aufnahme des Spannseils bzw. des Anbindungsteils gewährleistet ist.

Der Aufnahme bzw. der Längsnut kann eine Einrichtung zugeordnet sein, die beim Schließen des Faltverdecks gewährleistet, dass das Spannseil bzw. das Anbindungselement am Spriegel bzw. an der Aufnahme oder der Längsnut korrekt positioniert wird. Eine solche Einrichtung kann Führungsflächen oder Führungsbauteile aufweisen.

Bevorzugt ist die Aufnahme bzw. die Längsnut an der dem Verdeckbezug zugewandten Oberseite des Spriegels gebildet, jedoch können sie hiervon abweichend auch an Seitenflächen des Spriegels vorgesehen sein.

Zweckmäßigerweise ist das Spannseil beidseits an Lenkern des Verdeckgestells fest oder verstellbar angebracht und der Spriegel kann auch beidseits an diesen Lenkern des Verdeckgestells oder an anderen Lenkern fest oder verstellbar gelagert sein.

Ein derartiges Spannseil kann eine Falthilfe zur definierten Faltenbildung beim Ablegen des Verdeckbezugs bilden.

Die Bewegung des Spannseils und/oder des Spriegels kann von der Bewegung des Verdeckgestells abgeleitet sein oder sie erfolgt über zumindest einen eigenen Antrieb.

In bevorzugter Gestaltung ist das Spannseil bzw. sind die beiden beidseitig angeordneten Spannseile mit einem Spannteil verbunden, das sich statt des Spannseils bei geschlossenem Verdeck entlang dem Spriegel erstreckt und den Verdeckbezug gegen den Spriegel gespannt hält. Das Spannteil kann eine Stange oder ein Teil des Anbindungselements sein.

Nachfolgend wird ein erfindungsgemäßes Faltverdeck anhand von Ausführungsbeispielen unter Bezugnahme auf die Zeichnung näher erläutert. Es zeigt:
- Fig. 1: in einer Längsschnittansicht in schematischer Darstellung ein Faltverdeck eines Cabriolet-Fahrzeugs in geschlossener Stellung;
- Fig. 2: in einer perspektivischen Draufsicht in schematischer Darstellung ein Spriegel des Faltverdecks mit einem zugeordneten Spannseil bei geschlossenem Faltverdeck;
- Fig. 3: in einer perspektivischen Draufsicht in schematischer Darstellung der Spriegel mit dem Spannseil bei geöffnetem, abgelegtem Faltverdeck;
- Fig. 4: in einer Schnittansicht gemäß Fig. 1 den Spriegel mit einer Befestigung eines Verdeckbezugs;
- Fig. 5: in einer perspektivischen Draufsicht in schematischer Darstellung und in Halbdarstellung ein zweites Ausführungsbeispiel eines Faltverdecks in geöffneter abgelegter Stellung, wobei ein einem Spannseil zugeordneter Spriegel an einem Gestänge des Faltverdecks fest angebracht ist;
- Fig. 6: in einer perspektivischen Draufsicht das Faltverdeck gemäß Fig. 5 in vergrößerter Darstellung;
- Fig.7: in einer Seitenansicht in vergrößerter Darstellung das Faltverdeck gemäß Fig. 5;
- Fig. 8: in einer perspektivischen Draufsicht in schematischer Darstellung das Faltverdeck des zweiten Ausführungsbeispiels in geschlossener Stellung; wobei das Spannseil am Spriegel gespannt gehalten ist;
- Fig. 9: in einer Seitenansicht das Faltverdeck des zweiten Ausführungsbeispiels in geschlossener Stellung; und
- Fig. 10: in einer Seitenansicht in vergrößerter Darstellung das Faltverdeck gemäß Fig. 9.

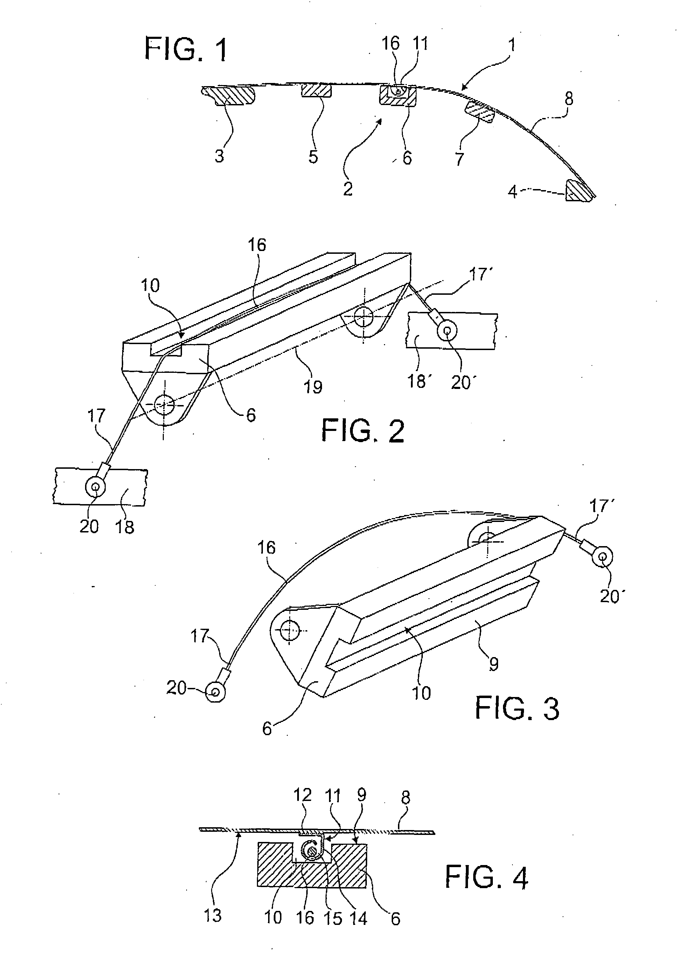

Ein Faltverdeck 1 eines Cabriolet-Fahrzeugs (siehe Fig. 1) enthält ein Verdeckgestell 2 mit einem vorderen Spriegel oder Windlaufspriegel 3, einem hinteren Spriegel oder Spannbügel 4 und einer dazwischen vorgesehenen Spriegelanordnung aus mehreren, beispielsweise drei Spriegeln 5, 6 und 7, die bei geschlossenem Faltverdeck 1 einen flexiblen Verdeckbezug 8 aufgespannt halten. Das Verdeckgestell 2 ist in an sich bekannter Weise über beidseitige Lenker an einem Verdecklager an der Karosserie des Fahrzeugs angelenkt und kann das Faltverdeck 1 zwischen einer Schließstellung und einer Offen- oder Ablagestellung verstellen.

Zumindest einer der Spriegel der Spriegelanordnung, beispielsweise der mittlere Spriegel 6, enthält an seiner dem Verdeckbezug 8 zugewandten Oberseite 9 eine Längsnut 10, in der bei geschlossenen Faltverdeck 1 ein Anbindungselement 11 aufgenommen ist (siehe Fig. 4, in den Fig. 2 und 3 nicht dargestellt), das sich im wesentlichen über die gesamte Länge des Spriegels 6 erstreckt und mit einem flächigen oberen Abschnitt 12, der z. B. aus der Längsnut 10 hervorsteht oder mit der Oberseite 9 des Spriegels 6 bündig abschließt, an der Innenfläche 13 des Verdeckbezugs 8 z. B. durch Verkleben befestigt ist. Ein unterer Abschnitt 14 des Anbindungselements 11 enthält einen Kanal 15, in dem ein Spannseil 16 aufgenommen ist, das mit seinen beiden Enden 17, 17' an den zugeordneten beidseitigen Gestängeteilen oder Lenkern 18 bzw. 18' des Verdeckgestells 2 befestigt ist.

Der Spriegel 6 ist derart am Verdeckgestell 2 bewegbar gelagert, dass er bei geschlossenem Faltverdeck 1 eine solche Stellung einnimmt, in der das Anbindungselement 11 in der Längsnut 10 aufgenommen und vom Spannseil 16 darin gespannt gehalten ist (Fig. 2). Damit ist über das Anbindungselement 11 auch der Verdeckbezug 8 in seiner gespannten Stellung am Spriegel 6 angeordnet.

Beim Öffnen und Ablegen des Faltverdecks 1 wird der Spriegel 6 aus der Stellung gemäß Fig. 2 in eine Stellung verstellt (z. B. in die Stellung gemäß Fig. 3), in der sich seine Längsnut 10 vom Anbindungselement 11 und dem Spannseil 16 entfernt hat, so dass das Spannseil 16 entspannt worden ist und mit dem Anbindungselement 11 und dem daran befestigten Abschnitt des Verdeckbezugs 8 gegenüber dem Verdeckgestell 2 und insbesondere dem Spriegel 6 beweglich ist.

Der Spriegel 6 ist beispielsweise mittels einer Gelenklagerung (nicht dargestellt) an den beiden Lenkern 18 und 18' um eine Schwenkachse 19 schwenkbar gelagert, wobei die Schwenkachse 19 gegenüber den Lenkern 18 und 18' und damit den Befestigungspunkten 20, 20' des Spannseils 16 an den Lenkern 18, 18' zum Spannen und Entspannen verstellbar sein kann. Der Spriegel 6 kann demzufolge mehrere Freiheitsgrade der Verstellbewegung aufweisen.

Zum Erzeugen der relativen Spann- und Entspannbewegung zwischen dem Spriegel 6 und dem Spannseil 16 kann auch vorgesehen sein, dass zumindest ein Ende 17 oder 17' des Spannseils 16 verstellbar gelagert ist und in Abhängigkeit der Bewegung und Stellung des Faltverdecks 1 die Spann- und Entspannbewegung ausführen kann. Dabei kann der Spriegel 6 am Verdeckgestell 2 bzw. den Lenkern 18, 18' fest oder auch bewegbar angeordnet sein, so dass beliebige Bewegungskombinationen der zuständigen Bauteile für das Spannen und Entspannen des Verdeckbezugs 8 bzw. des Spannseils 16 gestalterisch möglich sind.

Zweckmäßigerweise ist die Bewegung des Spriegels 6 und/oder des bzw. der Enden 17, 17' des Spannseils 16 an die Bewegung des Verdeckgestells 2 angekoppelt, jedoch kann auch eine eigene Antriebseinrichtung hierfür vorgesehen sein.

Das Anbindungselement 11 kann in unterschiedlichen Gestaltungen gebildet sein. Der Querschnitt der Längsnut 10 ist dementsprechend an die Querschnittsgestalt des Anbindungselements 11 anzupassen. Grundsätzlich kann eine Aufnahme für ein Anbindungselement 11 auch an anderer Stelle wie der Oberseite 9 des Spriegels 6 angeordnet sein, z. B. als nutförmige Vertiefung an der Vorderseite 21 oder der Rückseite 22 des Spriegels 6.

Ein derartiges querverlaufendes Spannseil 16 kann auch als Falthilfe vorgesehen sein, indem es über die Anbindung mittels eines Anbindungselements an den Verdeckbezug 8 an einer für eine Faltenbildung des Verdeckbezugs 8 beim Ablegen des Faltverdecks 1 vorgesehenen Stelle angeordnet ist. Durch eine entsprechende Relativbewegung des Spannseils gegenüber einem Spriegel kann eine definierte Faltenbildung erreicht werden.

Der Spriegel kann auch ein großflächiges Dachteil sein, über den zumindest ein Spannseil geführt ist.

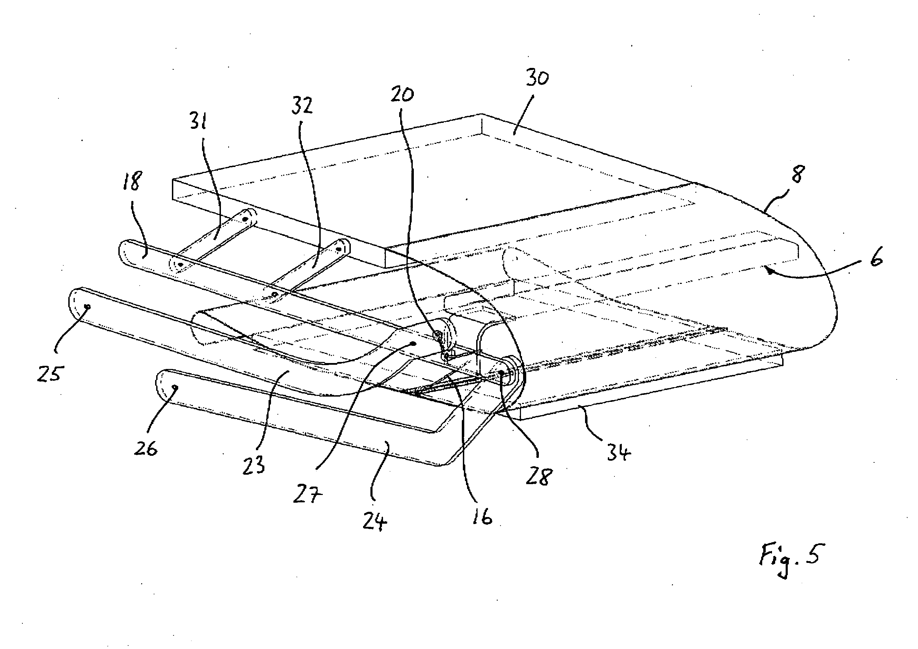

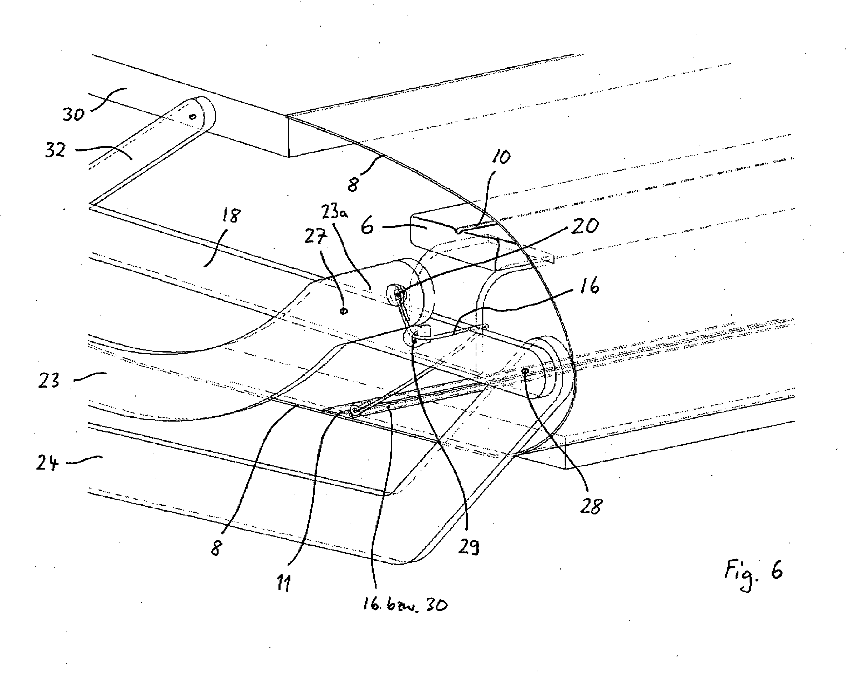

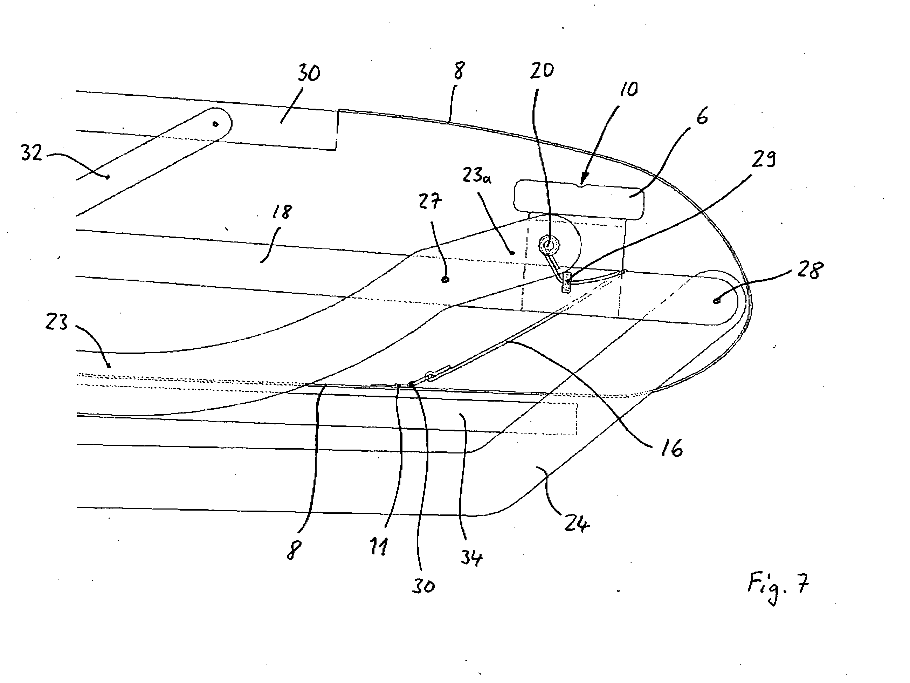

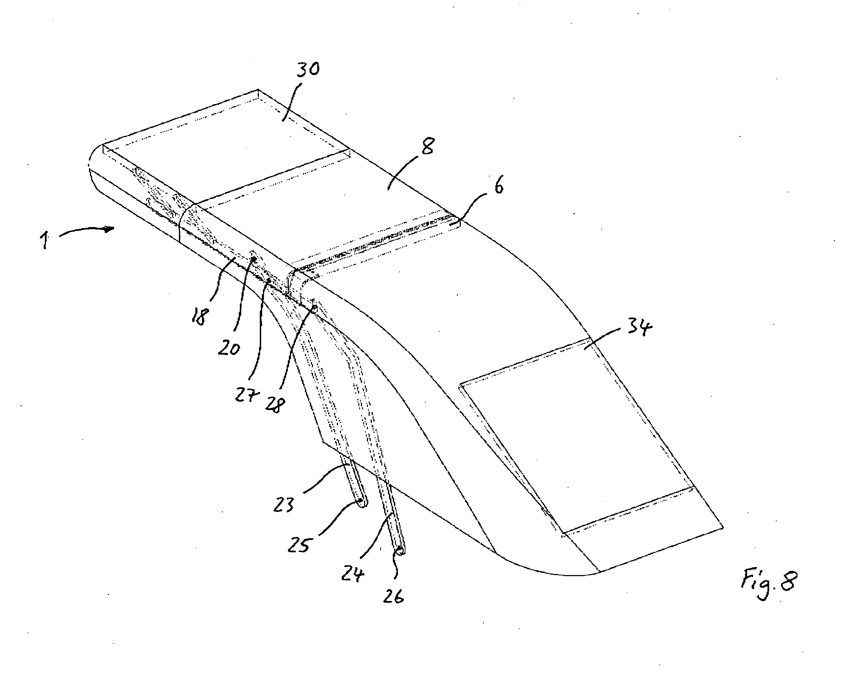

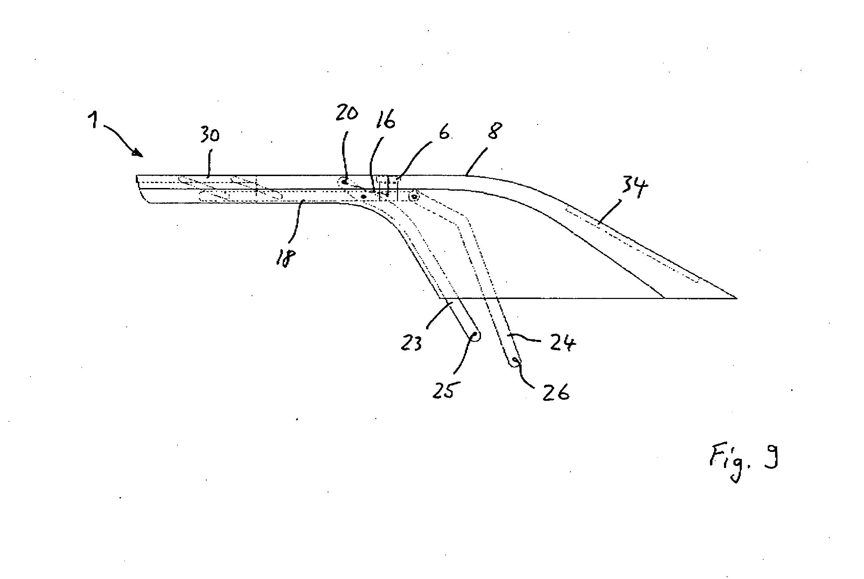

Bei dem zweiten Ausführungsbeispiel gemäß Fig. 5 bis 10 ist der Spriegel 6 an den beiden seitlichen Gestängeteilen 18 des Faltverdecks 1 fest angebracht. Das Faltverdeck 1 weist z. B. beidseits jeweils einen Hauptlenker 23 und eine Hauptsäule 24 auf, die einerseits karosserieseitig an einem Hauptlager in Gelenken 25 bzw. 26 schwenkbar angelenkt sind und andererseits mit dem Gestängeteil 18 in Gelenken 27 bzw. 28 in bekannter Weise in der Art eines Viergelenks schwenkbar verbunden sind.

Das Spannseil 16 ist endseitig in einem Befestigungspunkt 20 an einem Abschnitt 23a des Hauptlenkers 23 befestigt, der als Verlängerung über seine Anlenkung im Gelenk 27 hinausragt. Zumindest eine Öse 29 ist seitlich am Gestängeteil 18 im Bereich der Befestigung des Spriegels 6 oder am Seitenbereich des Spriegels 6 angebracht, führt das Spannseil 16 und bildet somit eine Umlenkung für das Spannseil 16. Das Spannseil 16 erstreckt sich bis an das am Verdeckbezug 8 angebrachte Anbindungselement 11 und an diesem entlang quer über den Verdeckbezug 8. In alternativer Gestaltung (wie in den Fig. 5 bis 10 dargestellt ist) endet das Spannseil 16 am seitlichen Ende des Anbindungselements 11 und ist dort mit einem Spannteil 30 verbunden, das sich quer über den Verdeckbezug 8 erstreckt und an der gegenüberliegenden Seite mit dem dortigen Spannseil 16 verbunden ist. Das Spannteil 30 kann ein Spannseil, eine Spannstange oder ein Teil des Anbindungselements 11 sein, das die Spannfunktion übernimmt.

Bei geöffnetem und abgelegtem Faltverdeck 1 (siehe Fig. 5 bis 7) sind der Hauptlenker 23 und die Hauptsäule 24 nach hinten geschwenkt und das seitliche Gestängeteil 18 in horizontaler Lage abwärts verlagert. Der Verdeckbezug 8 erstreckt sich von einem vorderen flächigen Verdeckteil 31, das über zwei Lenker 32 und 33 in Viergelenkanordnung am Gestängeteil 18 abgestützt ist, über den Spriegel 6 und in zwei Umbiegungen zu einem eine Heckscheibe enthaltenden hinteren Verdeckteil 34. Der Befestigungspunkt 20 des Spannseils 16 ist mit dem Abschnitt 23a des Hauptlenkers 23 um das Gelenk 27 nach hinten gegen den Spriegel 6 verschwenkt, so dass das Spannseil 16 entspannt ist und somit sich der Verdeckbezug 8 mit dem Anbindungselement 11 vom Spriegel 6 entfernen kann.

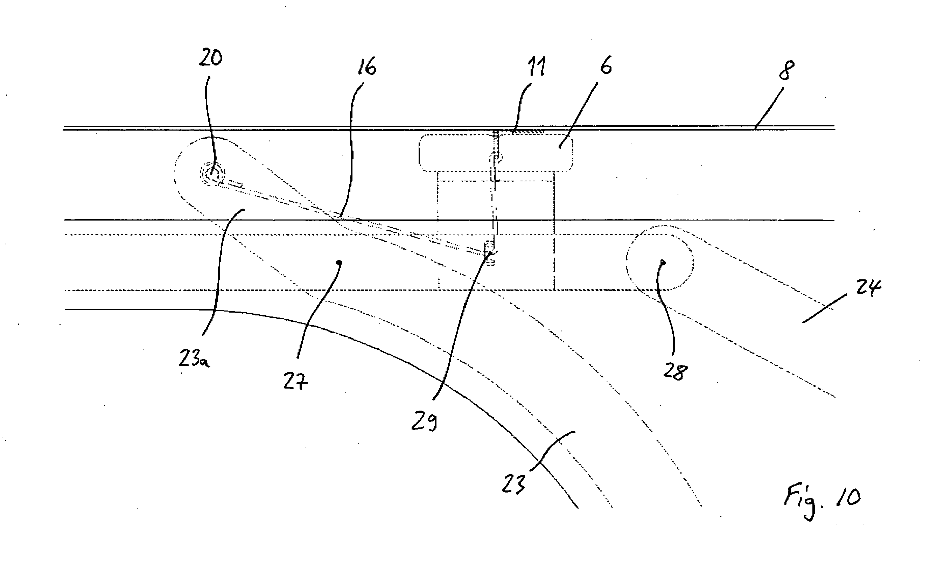

Beim Schließen des Faltverdecks 1 werden der Hauptlenker 23 und die Hauptsäule 24 nach oben und vorne ausgeschwenkt und das seitliche Gestängeteil 18 wird in horizontaler Lage nach oben und vorne parallel verschwenkt. Der Befestigungspunkt 20 des Spannseils 16 schwenkt mit dem Abschnitt 23a des Hauptlenkers 23 um das Gelenk 27 nach vorne vom Spriegel 6 weg, so dass das Spannseil 16 gespannt wird. Das vordere flächige Verdeckteil 31 schwenkt ebenfalls nach vorne und zieht den Verdeckbezug 8 nach vorne, so dass das Anbindungselement 11 über dem Spriegel 6 zu liegen kommt (siehe insbesondere Fig. 10). Das gespannte Spannseil 16 zieht das Anbindungselement 11 an die Oberseite des Spriegels 6 und das Spannseil 16 bzw. das Spannteil 30 in die Längsnut 10 an der Oberseite des Spriegels 6 in seine Spannstellung.

Die Spann- und Entspannbewegung für das Spannseil 16 kann auch von anderen Teilen des Gestänges oder Gestells 2 des Faltverdecks 1 erzeugt bzw. gesteuert werden, z. B. von der Hauptsäule 24 mit entsprechenden Umlenkungen des Spannseils 16.

Zusätzlich zu der Öse 29 können weitere Umlenkungen vorgesehen sein, falls dies für die Führung des Spannseils 16 zweckmäßig oder erforderlich sein sollte.

Der Befestigungspunkt 20 ist z. B. eine Schraube, an der ein Kabelschuh angebracht ist, der am Ende des Spannseils 16 befestigt ist.

Das Anbindungselement 11 kann z. B. eine sich über die Breite des Verdeckbezugs 8 erstreckende Tasche oder eine Schlaufe sein, die mit dem Verdeckbezug 8 fest verbunden ist, z. B. mittels HF-Schweißen, und in der das Spannseil 16 oder eine Spannstange oder dergleichen aufgenommen ist.

### Bezugszeichenliste

- 1: Faltverdeck
- 2: Verdeckgestell
- 3: Windlaufspriegel
- 4: Spannbügel
- 5: Spriegel
- 6: Spriegel
- 7: Spriegel
- 8: Verdeckbezug
- 9: Oberseite
- 10: Längsnut
- 11: Anbindungselement
- 12: oberer Abschnitt
- 13: Innenfläche
- 14: unterer Abschnitt
- 15: Kanal
- 16: Spannseil
- 17: Ende
- 17': Ende
- 18: Lenker
- 18': Lenker
- 19: Schwenkachse
- 20: Befestigungspunkt
- 20': Befestigungspunkt
- 21: Vorderseite
- 22: Rückseite
- 23: Hauptlenker
- 23a: Abschnitt
- 24: Hauptsäule
- 25: Gelenk
- 26: Gelenk
- 27: Gelenk
- 28: Gelenk
- 29: Öse
- 30: Spannteil
- 31: vorderes Verdeckteil
- 32: Lenker
- 33: Lenker
- 34: hinteres Verdeckteil

## Patentansprüche

1. Faltverdeck mit einem Verdeckbezug (8), der an einem am Fahrzeug angelenkten Verdeckgestell (2) gelagert und mit diesem zwischen einer Schließstellung und einer Offenstellung verstellbar ist, wobei das Verdeckgestell (2) zumindest einen Spriegel (6) aufweist, an dem der Verdeckbezug (8) bei geschlossenem Verdeck (1) gehalten ist,
**dadurch gekennzeichnet,**
**dass** ein Spannseil (16) am Verdeckgestell (2) angebracht ist, das sich bei geschlossenem Verdeck (1) entlang dem Spriegel (6) erstreckt und den Verdeckbezug (8) gegen den Spriegel (6) gespannt hält und das bei geöffnetem Verdeck (1) mit dem Verdeckbezug (8) vom Spriegel (6) entspannt ist.

2. Faltverdeck nach Anspruch 1,
**dadurch gekennzeichnet, dass** zum Ausführen einer Relativbewegung zwischen dem Spannseil (16) und dem Spriegel (6) das Spannseil (16) und/oder der Spriegel (6) relativ zum Verdeckgestell (2) bewegbar angebracht ist.

3. Faltverdeck nach Anspruch 1 oder 2,
**dadurch gekennzeichnet, dass** ein Anbindungselement (11) an der Innenfläche (13) des Verdeckbezugs (8) befestigt ist und das Spannseil (16) über dieses Anbindungselement (11) mit dem Verdeckbezug (8) verbunden ist.

4. Faltverdeck nach einem der Ansprüche 1 bis 3,
**dadurch gekennzeichnet, dass** der Spriegel (6) eine Aufnahme für das Spannseil (16) bzw. das Anbindungselement (11) aufweist.

5. Faltverdeck nach Anspruch 4,
**dadurch gekennzeichnet, dass** die Aufnahme als Längsnut (10) am Spriegel (6) gebildet ist.

6. Faltverdeck nach Anspruch 4 oder 5,
**dadurch gekennzeichnet, dass** die Aufnahme bzw. die Längsnut (10) an der dem Verdeckbezug (8) zugewandten Oberseite (9) des Spriegels (6) gebildet ist.

7. Faltverdeck nach einem der Ansprüche 1 bis 6,
**dadurch gekennzeichnet, dass** das Spannseil (16) beidseits an Lenkern (18, 18') des Verdeckgestells (2) fest oder verstellbar angebracht ist.

8. Faltverdeck nach einem der Ansprüche 1 bis 7,
**dadurch gekennzeichnet, dass** der Spriegel (6) beidseits an Lenkern (18, 18') des Verdeckgestells (2) fest oder verstellbar gelagert ist.

9. Faltverdeck nach einem der Ansprüche 1 bis 8,
**dadurch gekennzeichnet, dass** ein Spannseil (16) eine Falthilfe zur definierten Faltenbildung beim Ablegen des Verdeckbezugs (8) bildet.

10. Faltverdeck nach einem der Ansprüche 1 bis 9,
**dadurch gekennzeichnet, dass** die Bewegung des Spannseils (16) und/oder des Spriegels (6) von der Bewegung des Verdeckgestells (2) abgeleitet ist oder über zumindest einen eigenen Antrieb erfolgt.

11. Faltverdeck nach einem der Ansprüche 1 bis 10,
**dadurch gekennzeichnet, dass** das Spannseil (16) mit einem Spannteil (29) verbunden ist, das sich statt des Spannseils (16) bei geschlossenem Verdeck (1) entlang dem Spriegel (6) erstreckt und den Verdeckbezug (8) gegen den Spriegel (6) gespannt hält.
